# EUROPÄISCHE PATENTSCHRIFT

(11) **EP 1 515 224 B1**
(45) Veröffentlichungstag und Bekanntmachung des Hinweises auf die Patenterteilung: **24.12.2008**
(21) Anmeldenummer: 04021410.8
(22) Anmeldetag: 09.09.2004
(51) Int. Cl.: G06F 7/535, G06F 7/72

(54) **Division von Binärzahlen**
Division of binary numbers
Division de nombres binaires

(30) Priorität: 10.09.2003 DE 10341804
(43) Veröffentlichungstag der Anmeldung: 16.03.2005
(73) Patentinhaber: Giesecke & Devrient GmbH, 81667 München (DE)
(72) Erfinder: Kahl, Helmut, Dr., 80992 München (DE)
(74) Vertreter: Dendorfer, Claus

(56) Entgegenhaltungen:
- EP-A- 0 416 153
- EP-A- 0 971 331
- US-A- 4 272 827
- BURNIKEL CH., ZIEGLER J.: "Fast recursive division" RESEARCH REPORT MPI-I-98-1-022, MAX-PLANCK-INSTITUT FÜR INFORMATIK, Oktober 1998 (1998-10), Seiten 1-27, XP002374691 Saarbrücken, Germany

## Beschreibung

Die Erfindung betrifft allgemein das technische Gebiet der maschinellen Ausführung arithmetischer Operationen und spezieller das Gebiet der Ausführung einer Division zweier Binärzahlen, wobei ein ganzzahliger Quotient und ein Rest berechnet werden. Insbesondere eignet sich die Erfindung zum Einsatz bei kryptographischen Berechnungen, wie sie beispielsweise von tragbaren Datenträgern ausgeführt werden. In der hier verwendeten Wortwahl kann ein tragbarer Datenträger beispielsweise eine Chipkarte oder ein Chipmodul in unterschiedlichen Bauformen oder ein sonstiges ressourcenbeschränktes System sein.

Tragbare Datenträger weisen in der Regel eine Divisionshardware auf, die als Komponente eines Hauptprozessors oder eines arithmetischen Koprozessors ausgestaltet sein kann. Die Divisionshardware kann jedoch nur Binärzahlen einer vorbestimmten Maximallänge verarbeiten. Divisionsoperationen auf größeren Binärzahlen können von der Hardware nicht unmittelbar ausgeführt werden. Es sind vielmehr zusätzliche, durch Software definierte Berechnungsschritte erforderlich. Insbesondere hinsichtlich des Divisors ist es nicht einfach, eine von der Divisionshardware vorgegebene Längenbegrenzung zu überwinden.

Auch wenn die durch Hardware und/ oder Software implementierten Divisionsroutinen bei der Entwicklung eines tragbaren Datenträgers so ausgelegt wurden, daß sie die erwarteten Operandenlängen unterstützen, kann sich dennoch durch neue Erkenntnisse das Erfordernis ergeben, Divisionen mit längeren Operanden auszuführen. Dies kann beispielsweise der Fall sein, wenn Maßnahmen zur Abwehr neu entdeckter Angriffe auf kryptographische Verfahren implementiert werden sollen. Eine solcher Angriff kann z.B. der in dem US-Patent 5,991,415 beschriebene "*Bellcore attack*" sein, der sich gegen Implementierungen des RSA-Codier- und Signaturverfahrens wendet, die den chinesischen Restklassensatz (CRT - *Chinese remainder theorem)* einsetzen.

Zum Schutz gegen den "*Bellcore attack*" und andere Angriffe sind Gegenmaßnahmen vorgeschlagen worden, die eine modulare Reduktion - also eine Bestimmung des Rests einer Division - eines Zwischenergebnisses zu einem beim RSA-Verfahren verwendeten Modul m erfordern. Die Operanden aller anderen Divisionen des RSA-Verfahrens haben jedoch, wenn der chinesische Restklassensatz eingesetzt wird, nur eine ungefähr halb so große Bitlänge wie das Modul *m*. Wenn daher die von einem tragbaren Datenträger bereitgestellten Divisionsroutinen nur auf die für das eigentliche RSA-Verfahren benötigte Operandenlänge zugeschnitten sind, kann die für den abschließenden Sicherungsschritt erforderliche Division nicht ausgeführt werden. Es besteht daher ein Bedürfnis nach einem Divisionsverfahren, das sich bei den gerade geschilderten Umständen möglichst problemlos einsetzen läßt.

Aus der Literatur sind diverse Divisionsverfahren für Binärzahlen bekannt. So wird auf den Seiten 270 bis 275 des Buches *"The Art of Computer Programming"* von Donald E. Knuth, Band 2, 3. Auflage, Addison-Wesley, 1997 ein Divisionsverfahren beschrieben, bei dem in jedem Durchlauf einer Programmschleife je eine Stelle des Quotienten zunächst abgeschätzt und dann, falls erforderlich, in bis zu zwei Korrekturschritten auf den korrekten Wert korrigiert wird.

Der Forschungsbericht "*Fast Recursive Division"* von Christoph Burnikel und Joachim Ziegler, Max-Planck-Institut für Informatik, MPI-I-98-1-022, Oktober 1998, im Internet verfügbar unter *http:*//*www.mpi-sb.mpg.de*, beschreibt auf den Seiten 5 bis 8 ein als *"Algorithm 2"* bezeichnetes Divisionsverfahren, bei dem eine Division von Binärzahlen mit den Bitlängen 3n und 2n auf eine Division verkürzter Operanden mit den Bitlängen 2*n* und *n* zurückgeführt wird. Bei diesem Verfahren wird eine Korrekturschleife potenziell mehrfach durchlaufen.

Die genannten Verfahren des Stands der Technik sind relativ komplex und benötigen daher umfangreichen Programmcode zu ihrer Implementierung. Dies stellt ein erhebliches Problem für die Anwendung bei tragbaren Datenträgern dar, da dort der für Programmcode zur Verfügung stehende Speicherplatz sehr beschränkt ist. Überdies muß bei tragbaren Datenträgern stets auch auf die Effizienz der auszuführenden Verfahren geachtet werden, um die stets knappe Rechenleistung möglichst gut zu nutzen.

Aufgabe der Erfindung ist es, die oben dargestellten Probleme zumindest zum Teil zu vermeiden und eine Technik zum maschinellen Ausführen einer Division mit Rest vorzuschlagen, die hinreichend effizient arbeitet und die sich mit geringem Speicherplatzbedarf implementieren läßt. In bevorzugten Ausgestaltungen soll die hier vorgeschlagene Technik bereits vorhandene Divisionsroutinen oder -befehle auch für Operanden nutzbar machen, deren Größe die für die Divisionsroutine oder den Divisionsbefehl vorgesehene Maximalgröße übersteigt. Bevorzugte Ausgestaltungen der Technik sollen besonders gut zum Einsatz bei kryptographischen Verfahren und/ oder tragbaren Datenträgern geeignet sein.

Erfindungsgemäß wird diese Aufgabe ganz oder zum Teil gelöst durch ein Verfahren mit den Merkmalen des Anspruchs 1, ein Computerprogrammprodukt gemäß Anspruch 8 und einen tragbaren Datenträger gemäß Anspruch 9. Die abhängigen Ansprüche definieren bevorzugte Ausgestaltungen der Erfindung.

Die Erfindung geht von der Grundüberlegung aus, die auszuführende Division auf eine Division mit verkürzten Operanden zurückzuführen. Dazu wird zunächst ein Verkürzungswert *k* bestimmt, der angibt, wie viele Bits der ursprünglichen Operanden - gerechnet vom geringstwertigen Bit aus - bei der verkürzten Division nicht berücksichtigt zu werden brauchen. Durch geeignete Bedingungen hinsichtlich der Bitlängen der ursprünglichen Operanden und der Größe des Verkürzungswerts *k* wird sichergestellt, daß der bei der verkürzten Division berechnete Quotient nicht größer und maximal um 1 kleiner als der Quotient der ursprünglichen Operanden ist.

Aus den bei der verkürzten Division ermittelten Werten und aus den *k* geringstwertigen Bits der ursprünglichen Operanden wird ferner ein Rest berechnet, der entweder bereits der zu ermittelnde Rest ist oder der um den Divisor *b* kleiner als der zu ermittelnde Rest ist. Im erstgenannten Fall ist das Verfahren abgeschlossen, während im zweitgenannten Fall ein Korrekturschritt ausgeführt wird, bei dem der Rest *r* um den Divisor *b* erhöht und der Quotient *q* um 1 verringert wird.

Insgesamt stellt die Erfindung somit ein Divisionsverfahren bereit, das sich besonders einfach und mit geringer Codegröße implementieren läßt, ohne mehr Rechenzeit als bekannte Verfahren zu benötigen. Das erfindungsgemäße Verfahren ist speziell auf Fälle zugeschnitten, bei denen die Bitlänge des Dividenden *a* deutlich kleiner als die doppelte Bitlänge des Divisors *b* ist. Unter "Bitlänge" wird im vorliegenden Dokument die Anzahl der Bits einer Binärzahl bis zum höchstwertigen "1"-Bit verstanden. Mit anderen Worten gilt für die Bitlänge einer Binärzahl *c -* auch geschrieben als bl(*c*) - die Ungleichung 2^(bl(*c*) - 1) ≤ *c* < 2^bl(*c*), wobei das Zeichen "^" die Exponentenbildung bezeichnet. Das erfindungsgemäße Verfahren ist immer dann einsetzbar, wenn die Ungleichung bl(*b*) ≤ bl(*a*) < 2*(bl(*b*)-1) gilt, wobei *a* der Dividend und *b* der Divisor ist. Diese Voraussetzung ist beispielsweise bei dem eingangs kurz beschriebenen Anwendungsbeispiel eines Sicherungsverfahrens für RSA-Berechnungen erfüllt.

Einen besonders großen Verkürzungswert *k* - und damit einen besonders großen Unterschied zwischen den Bitlängen der ursprünglichen Operanden *a*, *b* und den Bitlängen der verkürzten Operanden, für die tatsächlich eine Division ausgeführt wird - besteht dann, wenn die Bitlängendifferenz bl(*a*) - bl(*b*) der ursprünglichen Operanden *a, b* gering ist. Je nach der konkreten Anwendung des hier beschriebenen Divisionsverfahrens kann jedoch möglicherweise schon ein kleiner Verkürzungswert *k* ausreichen, um z.B. ein ursprünglich nicht vorgesehenes kryptographisches Sicherungsverfahren auf einem vorgegebenen tragbaren Datenträger zu implementieren.

Erfindungsgemäß beinhaltet das Berechnen des Rests vor dem Korrekturschritt eine Multiplikation zweier relativ kleiner ganzer Zahlen, nämlich des berechneten Quotienten *q* und der *k* geringstwertigen Bits des Divisors *b*. Diese Multiplikation wird vorzugsweise von einer vorgegebenen Multiplikationsroutine oder einem hardwaremäßig implementierten Multiplikationsbefehl unterstützt.

Erfindungsgemäß wird der Verkürzungswert *k* in Abhängigkeit von der Differenz der Bitlängen bl(*a*) und bl(*b*) der beiden Operanden *a* und *b* so bestimmt, daß die Ungleichung *k* ≤ 2*(bl(*b*)-1) - bl(*a*) gilt. In bevorzugten Ausführungsformen wird hierbei der Verkürzungswert *k* möglichst groß, dabei jedoch als ganzzahliges Vielfaches einer Registerbreite eines Prozessors, der das Verfahren ausführen soll, bestimmt. Auf diese Weise werden die von dem Verkürzungswert *k* abhängigen Bitoperationen, beispielsweise das Extrahieren oder Kopieren der *k* geringstwertigen Bits der Operanden *a* und *b,* bedeutend vereinfacht.

Besonders gut eignet sich die Erfindung zum Einsatz in Umgebungen, die zwar eine Division mit den verkürzten Bitlängen bl(*a*) - *k* und bl(*b*) - *k*, nicht aber eine Division mit den ursprünglichen Bitlängen bl(*a*) und bl(*b*) unterstützen. Dies kann insbesondere dann der Fall sein, wenn die verkürzte Division, nicht aber die ursprüngliche Division, ganz oder zum überwiegenden Teil von einer speziellen Divisionshardware ausführbar ist. Die Erfindung ist jedoch nicht auf solche Anwendungsfälle beschränkt, sondern sie kann beispielsweise auch in Umgebungen eingesetzt werden, die lange Divisionen nur auf sehr ineffiziente Weise unterstützen.

Eine besonders hohe Einsparung hinsichtlich der Codegröße zur Implementierung des Verfahrens wird erreicht, wenn nur ein einziger Korrekturschritt - nämlich der bereits beschriebene Korrekturschritt, bei dem der Rest *r* um den Divisor *b* erhöht und der Quotient *q* um 1 verringert wird - vorgesehen ist. Erfindungsgemäß wird dieser Korrekturschritt bei jedem Divisionsvorgang höchstens ein einziges Mal ausgeführt, wodurch komplexe Ablaufstrukturen vermieden werden.

Die Aufzählungsreihenfolge der Verfahrensschritte in den Ansprüchen soll in bevorzugten Ausführungsformen nicht als Einschränkung des Erfindungsbereichs verstanden werden. Es sind vielmehr Ausgestaltungen der Erfindung vorgesehen, in denen diese Verfahrensschritte teilweise in anderer Reihenfolge und/ oder teilweise parallel und/oder teilweise ineinander verzahnt (*interleaved*) ausgeführt werden.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Insbesondere kann ein derartiges Computerprogrammprodukt Programmbefehle enthalten, die bei der Herstellung und/ oder Initialisierung und/ oder Personalisierung eines tragbaren Datenträgers in diesen übertragen werden.

In bevorzugten Ausgestaltungen sind das Computerprogrammprodukt und/ oder der tragbare Datenträger mit Merkmalen weitergebildet, die den oben beschriebenen und/oder den in den abhängigen Verfahrensansprüchen genannten Merkmalen entsprechen.

Weitere Merkmale, Vorteile und Aufgaben der Erfindung gehen aus der folgenden genauen Beschreibung eines Ausführungsbeispiels und mehrerer Ausführungsalternativen hervor. Es wird auf die schematischen Zeichnungen verwiesen.

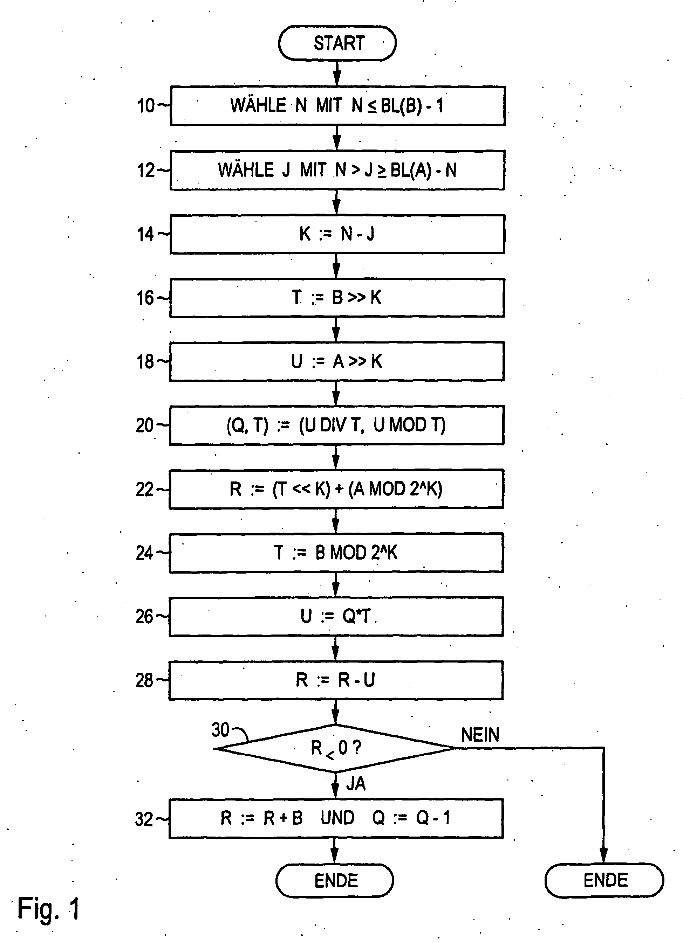

Fig. 1 als einzige Zeichnungsfigur zeigt ein Flußdiagramm eines Verfahrens zur Division mit Rest in einem Ausführungsbeispiel der Erfindung.

Das in Fig. 1 schematisch dargestellte Verfahren ist dazu vorgesehen, von einem Prozessor eines tragbaren Datenträgers, insbesondere einer Chipkarte (*smart card*) oder eines Chipmoduls, ausgeführt zu werden. Das Verfahren ist dazu in Form von Programmbefehlen für diesen Prozessor implementiert, die in einem ROM oder EEPROM des Datenträgers gespeichert sind.

Das vorliegende Ausführungsbeispiel wird im folgenden anhand des Ablaufs einer Division zweier langer Binärzahlen, nämlich eines Dividenden *a* und eines Divisors *b,* dargestellt. Die auch mit bl(*a*) bezeichnete Bitlänge des Dividenden *a* ist deutlich kleiner als das Doppelte der auch mit bl(*b*) bezeichneten Bitlänge des Divisors *b;* genauer gilt bl(*b*) ≤ bl(*a*) < 2*(bl(*b*)-1). Der tragbare Datenträger weist eine Divisionshardware auf, die beispielsweise in den Prozessor des Datenträgers oder in einen zusätzlichen arithmetischen oder kryptographischen Koprozessor integriert sein kann. Diese Divisionshardware vermag unmittelbar nur Divisionen von Operanden auszuführen, deren Bitlängen deutlich kleiner als die Bitlängen bl(*a*) und bl(*b*) der vorliegenden Operanden *a* und *b* sind. Das hier beschriebene Verfahren gestattet es jedoch, die erforderliche ganzzahlige Division des Dividenden *a* durch den Divisor *b* auf eine ganzzahlige Division mit deutlich verkürzten Operanden zurückzuführen.

Das Flußdiagramm gemäß Fig. 1 zeigt die während des Programmablaufs ausgeführten Zuweisungen und Berechnungsschritte in einer mathematischen Notation. Die verwendeten Bezeichner stehen jedoch nicht für feste Werte im mathematischen Sinne, sondern für Speicherbereiche oder Registerinhalte, die während des Berechnungsablaufs verändert und mit neuen Werten überschrieben werden können. Die Variablennamen *q, r, t* und *u* bezeichnen hierbei Puffer für große ganze Zahlen, beispielsweise mit einer maximalen Bitlänge von 2048 Bit, und die Namen *n, j* und *k* bezeichnen "kleine" Variablen mit einer Breite von beispielsweise 16 Bit, die zur Aufnahme von Bitlängenwerten dienen.

Das Verfahren beginnt in Schritt 10 mit der Bestimmung eines Wertes *n*, für den die Ungleichung *n* ≤ bl(*b*) - 1 gilt. Beispielsweise kann *n* := bl(*b*) - 1 gesetzt werden, wobei optional der so ermittelte Wert n noch auf das nächste ganzzahlige Vielfache der Bitbreite der Prozessorregister des tragbaren Datenträgers abgerundet werden kann.

In Schritt 12 wird ein Wert *j* mit *j* ≥ bl(*a*) - *n* bestimmt. Auch hier kann beispielsweise *j* := bl(*a*) *- n* gesetzt werden, und optional kann eine Aufrundung auf ein Vielfaches der Prozessorbitbreite erfolgen.

In Schritt 14 wird ein Verkürzungswert *k* als Differenz zwischen den Werten *n* und *j* berechnet; es gilt die Ungleichung *k ≤* 2*(bl(*b*)-1) - bl(*a*). In Ausführungsalternativen kann der Wert *k* auch auf eine andere Weise berechnet werden, die sicherstellt, daß der berechnete Wert *k* positiv ist und die gerade genannte Ungleichung erfüllt. Auch in diesem Zusammenhang ist es vorteilhaft, den Verkürzungswert *k* möglichst groß und als ganzzahliges Vielfaches der Prozessorregisterbreite zu bestimmen.

In Schritt 16 wird die Variable *t* mit dem um *k* Bits nach rechts verschobenen Divisor *b* beschrieben. Dieser Vorgang läßt sich auch als *t* := *b* div 2^*k* ausdrücken, wobei "div" für die ganzzahlige Division unter Vernachlässigung eines gegebenenfalls vorhandenen Rests steht. Insbesondere, wenn *k* als Vielfaches der Prozessorregisterbreite oder einer sonstigen Wortbreite des Datenträgers gewählt wurde, läßt sich Schritt 16 vorteilhaft durch einfaches Kopieren der Speicherwörter des Divisors *b* ab dem (k+1)-ten Bit rechtsbündig in den Puffer *t* implementieren.

In Schritt 18 wird der Puffer u analog zu der gerade im Zusammenhang mit Schritt 16 beschriebenen Weise mit dem um k Bits nach rechts verschobenen Dividenden *a* beschrieben.

Als Ergebnis von Schritt 18 liegen in den Puffern *u* und *t* zwei verkürzte Operanden vor, deren Bitlängen gegenüber den Bitlängen der ursprünglichen Operanden *a* und *b* jeweils um den Verkürzungswert *k* verringert worden sind. Diese verkürzten Operanden *u* und *t* werden in Schritt 20 mit Rest dividiert; in Fig. 1 steht die Bezeichnung "mod" für die Restberechnung. Der sich bei der Division in Schritt 20 ergebende Quotient wird im Puffer *q* gespeichert, während der Rest den bisherigen Wert im Puffer *t* überschreibt. Aufgrund der bislang genannten Bedingungen für die Bitlängen bl(*a*) und bl(*b*) und den Verkürzungswert *k* ist sichergestellt, daß der in Schritt 20 berechnete Quotient *q* entweder bereits der korrekte Quotient *a* div *b* oder allenfalls der Wert (*a* div *b*)+1 ist.

Zur Ausführung der Division in Schritt 20 wird die vom Prozessor bzw. Koprozessor des Datenträgers bereitgestellte Divisionsroutine genutzt. In Ausführungsalternativen kann dagegen ein anderes an sich bekanntes Divisionsverfahren eingesetzt werden. Es sind auch Implementierungen vorgesehen, bei denen im Zuge der Division in Schritt 20 unmittelbar auf die Speicherbereiche der ursprünglichen Operanden *a* und *b* zugegriffen wird, wobei jedoch jeweils die *k* geringstwertigen Bits dieser Speicherbereiche nicht berücksichtigt werden. Die Kopierschritte 16 und 18 können in solchen Ausführungsalternativen entfallen.

Die Schritte 22 bis 28 betreffen die Berechnung eines Rests *r,* der im Hinblick auf den in Schritt 20 berechneten Quotienten *q* "korrekt" ist, für den also die Beziehung *r* = *a - q*b* gilt. Zunächst wird in Schritt 22 der Puffer *r* mit dem um *k* Bits nach links verschobenen Divisionsergebnis *t* und den *k* geringstwertigen Bits des ursprünglichen Dividenden *a* gefüllt. Dieser Vorgang kann, auch wenn Schritt 22 in Fig. 1 in einer mathematischen Notation gezeigt ist, ohne Berechnungsaufwand durch einige Kopiervorgänge von Speicherwörtern und gegebenenfalls Speicherbits erfolgen. Der nun im Speicherbereich *r* enthaltene Wert ist kleiner als der Divisor *b*.

Ebenfalls durch bloßes Löschen und Kopieren wird in Schritt 24 der Puffer *t* mit den *k* geringstwertigen Bits des Divisors *b* gefüllt.

In Schritt 26 wird ein Produkt *u* des in Schritt 20 berechneten Quotienten *q* mit dem Inhalt des in Schritt 24 neu beschriebenen Puffers *t* berechnet. Da für den Quotienten *q* zu diesem Zeitpunkt die Ungleichung *q* ≤ 2^*j* gilt, und da *t* maximal die Bitlänge *k* aufweist, kann diese Multiplikation mit relativ geringem Aufwand - in der Regel hardwaremäßig unterstützt durch den Prozessor bzw. den Koprozessor des Datenträgers - durchgeführt werden. Geeignete Multiplikationsverfahren zur Verwendung in Schritt 26 sind als solche bekannt. Nach der Ausführung von Schritt 26 gilt *u* < 2^*n* ≤ *b*.

In Schritt 28 wird schließlich der Rest r als Differenz des in Schritt 22 berechneten Wertes *r* und des Produkts *u* von Schritt 26 bestimmt. Es gelten nun die Beziehungen *a - q*b* = *r* und *-b* ≤ *r* < *b.*

Um das endgültige Divisionsergebnis zu erhalten, erfolgt in Schritt 30 eine Abfrage, ob der in Schritt 28 berechnete Rest *r* negativ ist. Wenn dies nicht der Fall ist, wurden in den Schritten 20 und 28 bereits der korrekte Quotient *q* und der korrekte Rest *r* berechnet, und der Verfahrensablauf wird beendet. Falls dagegen der bisherige Rest *r* negativ ist, wird ein Korrekturschritt 32 ausgeführt, bei dem der Rest *r* um den Divisor *b* erhöht und der Quotient *q* um 1 verringert wird. Als Ergebnis dieses Korrekturschritts 32 gilt 0 ≤ *r* < *b,* so daß kein weiterer Korrekturschritt mehr erforderlich ist. Der Divisionsvorgang ist damit abgeschlossen; es *gilt q* = *a* div *b* und *r* = *a* mod *b*.

Der für das Verfahren gemäß Fig. 1 benötigte Rechenaufwand wird durch die Division in Schritt 20 und die Multiplikation in Schritt 26 bestimmt. Bei theoretischer Betrachtung ist dieser Rechenaufwand ungefähr gleich groß wie bei bekannten Verfahren zur Division mit Rest. In der Praxis ergibt sich jedoch der zusätzliche Vorteil, daß im vorliegenden Ausführungsbeispiel sowohl die Division in Schritt 20 als auch die Multiplikation in Schritt 26 sehr effizient durch den Koprozessor des Datenträgers ausgeführt werden können.

In einem konkreten Anwendungsbeispiel für das oben beschriebene Verfahren weist der Datenträger einen kryptographischen Koprozessor auf, der Divisionen mit Rest für Operanden mit einer maximalen Bitlänge von 1024 Bit auszuführen vermag. Diese Dimensionierung reicht für viele bislang übliche Implementierungen eines RSA-Codierverfahrens oder eines RSA-Signaturverfahrens mit einer maximalen Schlüssellänge von 2048 Bit aus. Um jedoch eine gegen Hardwareangriffe besonders gesicherte Implementierung bereitzustellen, muß eine modulare Reduktion - also eine Division mit Rest - durchgeführt werden, deren Operanden eine deutlich höhere Bitlänge als 1024 Bit aufweisen. Das hier beschriebene Verfahren erlaubt es, diese Division mit relativ wenig Programmcode und akzeptablem Rechenaufwand unter Nutzung des kryptographischen Koprozessors des Datenträgers zu implementieren.

## Patentansprüche

1. Verfahren zum maschinellen Ausführen einer Division mit Rest eines Dividenden *a* durch einen Divisor *b*, wobei der Dividend *a* und der Divisor *b* als Binärzahlen mit Bitlängen bl(*a*) bzw. bl(*b*) vorliegen, die Ungleichung bl(*b*) ≤ bl(*a*) < 2*(bl(*b*)-1) gilt und wegen von der Hardware vorgegebener Längenbegrenzung die Divisionsoperation nicht unmittelbar mit a und b ansgeführt werden kann, mit den Schritten:
a) Bestimmen eines positiven Verkürzungswertes *k*, so daß die Ungleichung *k* ≤ 2*(bl(*b*)-1) - bl(*a*) gilt,
b) Ausführen einer Division mit Rest, bei der der um seine *k* geringstwertigen Bits verkürzte Dividend *a* durch den um seine *k* geringstwertigen Bits verkürzten Divisor *b* geteilt wird, um einen Quotienten *q* und einen verkürzten Rest *t* zu erhalten,
c) Berechnen eines Rests *r* unter Verwendung der *k* geringstwertigen Bits des Dividenden *a*, der *k* geringstwertigen Bits des Divisors *b*, des in Schritt b) berechneten Quotienten *q* und des in Schritt b) berechneten verkürzten Rests *t*, so daß die Beziehungen *r* = *a* - *q***b* und -*b* ≤ *r* < *b* gelten, wobei eine Multiplikation des in Schritt b) berechneten Quotienten *q* mit den *k* geringstwertigen Bits des Divisors *b* ausgeführt wird, um ein Produkt *u* zu erhalten, und das Produkt *u* von der Konkatenation des verkürzten Rests *t* mit den *k* geringstwertigen Bits des Dividenden *a* abgezogen wird, um den Rest r zu erhalten, und
d) falls der in Schritt c) berechnete Rest *r* negativ ist, dann Ausführen eines einzigen Korrekturschritts, bei dem der Rest *r* um den Divisor *b* erhöht und der Quotient *q* um 1 verringert wird.

2. Verfahren nach Anspruch 1, **dadurch gekennzeichnet, daß** in Schritt a) der Verkürzungswert *k* so bestimmt wird, daß er ein Vielfaches einer Registerbreite oder einer sonstigen Wortbreite eines Prozessors, auf dem das Verfahren ausgeführt werden soll, beträgt.

3. Verfahren Anspruch 1 oder Anspruch 2, **dadurch gekennzeichnet, daß** in Schritt a) der Verkürzungswert *k* als Differenz zweier Werte *n* und *j* berechnet wird, wobei die Werte *n* und *j* mit *n* > *j* so bestimmt werden, daß die Ungleichungen *n* ≤ bl(*b*) -1 und bl(*a*) - *n* ≤ *j* gelten.

4. Verfahren nach einem der Ansprüche 1 bis 3, **dadurch gekennzeichnet, daß** die Division in Schritt b) mittels eines Divisionsverfahrens ausgeführt wird, das zwar eine Division mit Bitlängen bl(*a*)-*k* und bl(*b*)-*k* für den Dividenden bzw. Divisor, nicht aber eine Division mit Bitlängen bl(*a*) und bl(*b*) für den Dividenden bzw. Divisor unterstützt.

5. Verfahren nach Anspruch 4, **dadurch gekennzeichnet, daß** das für die Division in Schritt b) verwendete Divisionsverfahren von einer Divisionshardware ausgeführt wird.

6. Verfahren nach einem der Ansprüche 1 bis 5, **dadurch gekennzeichnet, daß** das Verfahren dazu vorgesehen ist, im Zusammenhang mit einem RSA-Codierverfahren oder einem RSA-Signaturverfahren, insbesondere auf einem tragbaren Datenträger, eingesetzt zu werden.

7. Computerprogrammprodukt, das Programmbefehle aufweist, die dazu eingerichtet sind, einen Prozessor zu veranlassen, ein Verfahren mit den Merkmalen eines der Ansprüche 1 bis 6 auszuführen.

8. Tragbarer Datenträger, insbesondere Chipkarte oder Chipmodul, wobei der Datenträger mindestens einen Prozessor aufweist und zur Ausführung eines Verfahrens mit den Merkmalen eines der Ansprüche 1 bis 6 eingerichtet ist.

9. Tragbarer Datenträger nach Anspruch 8, **dadurch gekennzeichnet, daß** der Datenträger eine Divisionshardware aufweist, die für die Division in Schritt b) verwendet wird.

## Claims

1. Method for automatically executing a division with remainder of a dividend *a* by a divisor *b*, wherein the dividend *a* and the divisor *b* are given as binary numbers having bit lengths bl(*a*) and bl(*b*), respectively, wherein the inequality bl(*b*) ≤ bl(*a*) < 2*(bl(*b*)-1) applies, and wherein the division operation, due to length limitation set by the hardware, cannot be executed directly with *a* and *b*, comprising the steps of:
a) determining a positive shortening value *k* so that the inequality *k* ≤ 2*(bl(*b*)-1) - bl(*a*) applies,
b) executing a division with remainder, in which the dividend *a* shortened by its *k* least significant bits is divided by the divisor *b* shortened by its *k* least significant bits, in order to obtain a quotient *q* and a shortened remainder *t*,
c) calculating a remainder *r* using the *k* least significant bits of the dividend *a*, the *k* least significant bits of the divisor *b*, the quotient *q* calculated in step b), and the shortened remainder *t* calculated in step b), so that the relations *r* = *a* - *q***b* and -*b* ≤ *r* < *b* apply, wherein a multiplication of the quotient *q* calculated in step b) with the *k* least significant bits of the divisior *b* is executed in order to obtain a product *u*, and wherein the product *u* is subtracted from the concatenation of the shortened remainder *t* with the *k* least significant bits of the dividend *a* in order to obtain the remainder *r*, and
d) if the remainder *r* calculated in step c) is negative, then executing a single correction step in which the remainder *r* is increased by the divisor *b* and the quotient *q* is reduced by 1.

2. Method according to claim 1, **characterised in that,** in step a), the shortening value *k* is determined such that it is a multiple of a register width or other word width of a processor on which the method is to be executed.

3. Method according to claim 1 or 2, **characterised in that,** in step a), the shortening value *k* is calculated as the difference between two values *n* and *j*, wherein the values *n* and *j* with *n* > *j* are determined such that the inequalities *n* ≤ bl(*b*) -1 and bl(*a*) - *n* ≤ *j* apply.

4. Method according to any one of the claims 1 to 3, **characterised in that** the division in step b) is executed by means of a division method which supports a division with bit lengths bl(*a*)-*k* and bl(*b*)-*k* for the dividend and the divisor, respectively, but not a division with bit lengths bl(*a*) and bl(*b*) for the dividend and the divisor, respectively.

5. Method according to claim 4, **characterised in that** the division method used for the division in step b) is executed by a division hardware.

6. Method according to any one of the claims 1 to 5, **characterised in that** the method is intended to be employed in connection with an RSA encoding method or an RSA signature method, in particular on a portable data carrier.

7. Computer program product having program commands desigend to cause a processor to execute a method having the features of any one of the claims 1 to 6.

8. Portable data carrier, in particular chip card or chip module, wherein the data carrier has at least one processor and is set up for executing a method having the features of any one of the claims 1 to 6.

9. Portable data carrier according to claim 8, **characterised in that** the data carrier has a division hardware which is used for the division in step b).

## Revendications

1. Procédé pour l'exécution mécanique d'une division avec reste d'un dividende *a* par un diviseur *b,* le dividende *a* et le diviseur *b* se présentant comme des nombres binaires de longueurs binaires bl(*a*) et bl(*b*), l'inégalité bl(*a*) ≤ bl (*b*) < 2*(bl(*b*)-1) étant présentée, l'opération de division ne pouvant être directement effectuée avec *a* et *b* en raison de la limitation de longueur imposée par le matériel, et comprenant les étapes suivantes :
a) détermination d'une valeur de diminution positive *k*, de manière à réaliser l'inégalité *k* ≤ 2*(bl(*b*)-1)-bl(*a*),
b) exécution d'une division avec reste, où le dividende *a* diminué de ses *k* bits de valeur minimale est divisé par le diviseur *b* diminué de ses *k* bits de valeur minimale, pour obtenir un quotient *q* et un reste diminué *t,*
c) calcul d'un reste *r* en appliquant les *k* bits de valeur minimale du dividende *a*, les *k* bits de valeur minimale du diviseur *b,* le quotient *q* calculé en étape b) et le reste diminué *t* calculé en étape b), de manière à réaliser les relations *r* = *a* - *q***b* et -*b* ≤ *r* < *b*, une multiplication du quotient *q* avec les *k* bits de valeur minimale du diviseur *b* étant effectuée pour obtenir un produit *u*, et le produit *u* étant soustrait de la concaténation du reste diminué *t* avec les *k* bits de valeur minimale du dividende *a* pour obtenir le reste *r*, et
d) si le reste *r* calculé en étape c) est négatif, exécution d'une étape de correction unique, où le reste *r* est augmenté du diviseur *b* et le quotient *q* réduit de 1.

2. Procédé selon la revendication 1, **caractérisé en ce qu'**en étape a), la valeur de diminution *k* est déterminée de manière à être un multiple d'une largeur de registre ou d'une autre largeur de mot d'un processeur sur lequel le procédé doit être exécuté.

3. Procédé selon la revendication 1 ou la revendication 2, **caractérisé en ce qu'**en étape a), la valeur de diminution *k* est calculée comme différence de deux valeurs *n* et *j*, les valeurs *n* et *j* étant déterminées pour *n* > *j* de manière à réaliser les inégalités *n* ≤ bl(*b*)-1 et bl(*a*)-*n* ≤ *j*.

4. Procédé selon l'une des revendications 1 à 3, **caractérisé en ce que** la division en étape b) est effectuée au moyen d'un procédé de division assistant une division avec des longueurs binaires bl(*a*)-*k* et bl(*b*)-*k* pour le dividende et le diviseur, mais pas une division avec des longueurs binaires bl(*a*) et bl(*b*) pour le dividende et le diviseur.

5. Procédé selon la revendication 4, **caractérisé en ce que** le procédé de division appliqué pour la division en étape b) est exécuté par un matériel de division.

6. Procédé selon l'une des revendications 1 à 5, **caractérisé en ce que** le procédé est prévu pour être appliqué en relation avec un procédé de codage RSA ou un procédé de signature RSA, en particulier sur un support de données portable.

7. Produit de programme informatique comportant des instructions de programme incitant un processeur à exécuter un procédé avec les caractéristiques d'une des revendications 1 à 6.

8. Support de données portable, en particulier carte à puce ou module à puce, où le support de données comporte au moins un processeur et est réglé pour l'exécution d'un procédé avec les caractéristiques d'une des revendications 1 à 6.

9. Support de données portable selon la revendication 8 , **caractérisé en ce que** le support de données comporte un matériel de division utilisé pour la division en étape b).
